Europäisches Patentamt

European Patent Office

Office européen des brevets

(19)

(11) Veröffentlichungsnummer : **0 183 963**
**B1**

(12) # EUROPÄISCHE PATENTSCHRIFT

(45) Veröffentlichungstag der Patentschrift :
**11.01.89**

(51) Int. Cl.⁴ : **B 60 R 11/02**

(21) Anmeldenummer : **85113441.1**

(22) Anmeldetag : **23.10.85**

(54) **Mechanische Diebstahlsicherung für elektronische Zusatzgeräte mit Kassetten-Laufwerk in Kraftfahrzeugen, insbesondere für Autoradios.**

(30) Priorität : **30.11.84 DE 3443651**

(43) Veröffentlichungstag der Anmeldung :
**11.06.86 Patentblatt 86/24**

(45) Bekanntmachung des Hinweises auf die Patenterteilung : **11.01.89 Patentblatt 89/02**

(84) Benannte Vertragsstaaten :
**DE FR GB IT**

(56) Entgegenhaltungen :
**GB–A– 2 105 083**
**GB–A– 2 131 219**
**US–A– 4 131 001**
**US–A– 4 527 405**

(73) Patentinhaber : **Blaupunkt-Werke GmbH
Robert-Bosch-Strasse 200
D-3200 Hildesheim (DE)**

(72) Erfinder : **Weinert, Alfons
Salzwiese 34
D-3200 Hildesheim (DE)**
Erfinder : **Gröger, Klaus, Dipl.-Ing.
Söhrer Tor 8
D-3201 Diekholzen (DE)**

(74) Vertreter : **Eilers, Norbert, Dipl.-Phys.
Blaupunkt-Werke GmbH Robert-Bosch-Strasse 200
D-3200 Hildesheim (DE)**

## Beschreibung

Die Erfindung betrifft eine Diebstahl-Sicherung für elektronische Zusatzgeräte mit Kassetten-Laufwerk für Kraftfahrzeuge, zum Beispiel Autoradios die an ihrer Bedienungsseite die Einschuböffnung für die Wechselkassette tragen und vom Aufenthaltsraum des Kraftfahrzeugs her in eine vorgegebene Öffnung einer Fahrzeugwand eingesetzt und in der Fahrzeugwand lösbar befestigt und nach Lösung ihrer Befestigung herausziehbar sind.

Unter Kraftfahrzeug sind dabei nicht nur Autos, sondern alle Personen aufnehmenden Kraftfahrzeuge, zum Beispiel auch Schiffe, zu verstehen. Die Befestigung des Zusatzgerätes in der Fahrzeugwand kann unmittelbar durch Verschrauben mit der Fahrzeugwand oder durch Verrasten mit einem in die Einbauöffnung eingesetzten Einschubrahmen erfolgen. Unter Zusatzgerät sind alle in Fahrzeugen möglichen elektronischen Geräte mit Kassetten-Laufwerk zu verstehen also neben Autoradios auch Videogeräte Rechner, Anrufbeantworter und dergleichen.

Die dafür bekannten elektronischen Diebstahl-Sicherungen machen in der Regel das Zusatzgerät nach dem Ausbau unverwendbar, können aber vom Aufbrechen des Fahrzeuges nicht abschrecken und den Diebstahl des Zusatzgerätes nicht verhindern.

Es besteht deshalb die Aufgabe, für solche Zusatzgeräte eine mechanische Diebstahl-Sicherung zu schaffen, die einfach, robust und preiswert ist, universell und unabhängig von der jeweiligen Gerätetype und deren Einbau in die Fahrzeugwand verwendbar ist und nur geringe mechanische Änderung oder Ergänzung am Zusatzgerät, Kraftfahrzeug und deren Verbindung verlangt.

Die Neuerung erreicht dies durch die technischen Merkmale des Anspruchs 1.

Bei der Neuerung werden unter Zuhilfenahme einer Blindkassette mit eingebautem Sicherheits-Zylinderschloß Zusatzgerät und Fahrzeug miteinander fest verriegelt. Der Dieb kann also das Zusatzgerät, zum Beispiel ein wertvolles Kassetten-Autoradio, nicht mehr aus der Einbauöffnung in der Fahrzeugwand herausziehen, selbst wenn die Lösung der Befestigung in der Fahrzeugwand, sei es durch Verschraubung oder Verrastung, gelingen sollte. Dies ist nur mit dem zum Sicherheits-Zylinderschloß passenden Sicherheitsschlüssel durch Aufhebung der gegenseitigen Verriegelung von Zusatzgerät und Fahrzeug durch Öffnen des in der Blindkassette sitzenden Sicherheits-Zylinderschlosses möglich. Da es bei der Neuerung nur auf die Blindkassette und ein entsprechendes als Schließblech wirkendes und mit dem Fahrzeug fest verbundenes Gegenstück ankommt, läßt sich die Neuerung bei den verschiedensten Befestigungsarten für das Zusatzgerät, zum Beispiel in der Kraftfahrzeugwand verschraubt oder mittels eines Einschubrahmens oder von Halteklammern befestigt, verwenden und eignet sich für Laufwerke nahe der Decke oder dem Boden des Zusatzgerätes mit oder ohne Motoreinzug der Wechselkassette mit links, mittig oder rechts liegendem Tonkopf und mit Längs- oder Quereinschub der Wechselkassette. Eine zusätzliche Bearbeitung des vorgegebenen Zusatzgerätes, Einschubrahmens oder Flachbügels ist nur zur Herstellung der den Sperriegel des Sicherheitsschlosses aufnehmenden Fenster nötig. Die Neuerung läßt sich bei allen Zusatzgeräten anwenden, deren Kassetten-Laufwerke von der Frontseite her bedient werden. Die Sicherung nach der Neuerung hält einen potentiellen Dieb bereits vom Aufbrechen des Fahrzeugs ab, weil das Sicherheitsschloß an der Kassette durch die Fahrzeugfenster bei auffälliger Anordnung unschwierig erkennbar ist und den unbefugten Ausbau des Zusatzgeräts aussichtslos erscheinen läßt. Nach dem Öffnen des Sicherheitsschlosses und Herausziehen der Blindkassette aus dem Zusatzgerät mit dem Sicherheitsschlüssel lassen sich die zum Zusatzgerät gehörigen Aufzeichnungs-Wechselkassetten in bekannter Art einschieben und herausnehmen.

Weitere Einzelheiten der Neuerung sind aus den Unteransprüchen ersichtlich. Fehlen mit der Einbauöffnung in der Kraftfahrzeugwand durch Verrasten oder Verschrauben verbundene Einschubrahmen oder sind solche Halterahmen nicht tief genug, dann wird bei der Neuerung das dritte und das Schließblech mitbildende Fenster für den Sperriegel in einem das Zusatzgerät übergreifenden oder untergreifenden und mit der Fahrzeugkarosse fest verbundenen, ohnehin bereits vorhandenen oder schnell montierbaren Flachbügel vorgesehen.

Weitere Einzelheiten und Vorteile der Neuerung werden anhand von Zeichnung und Ausführungsbeispielen zur Sicherung von Kassetten-Autoradios erläutert. Dabei zeigen in schematischer Darstellung und in unterschiedlichen Maßstäben :

Fig. 1 die perspektivische Ansicht eines in einer Kraftfahrzeugwand mit Hilfe eines Einschubrahmens eingesetzten Zusatzgerätes mit quer eingeschobener Blindkassette im Einschubfach unter der Gerätdecke nach Verriegelung ;

Fig. 2 eine teilweise geschnittene Draufsicht auf die in das Zusatzgerät eingeschobene Blindkassette vor dem Verriegeln ;

Fig. 3 eine teilweise geschnittene (Linie A-A) Frontansicht laut Fig. 2, jedoch nach dem Verriegeln und

Fig. 4 in Explosionsdarstellung die Sicherung mit Hilfe der Blindkassette laut Fig. 2 und 3 bei einem mit Kurzrahmen in der Fahrzeugwand befestigten Zusatzgerät.

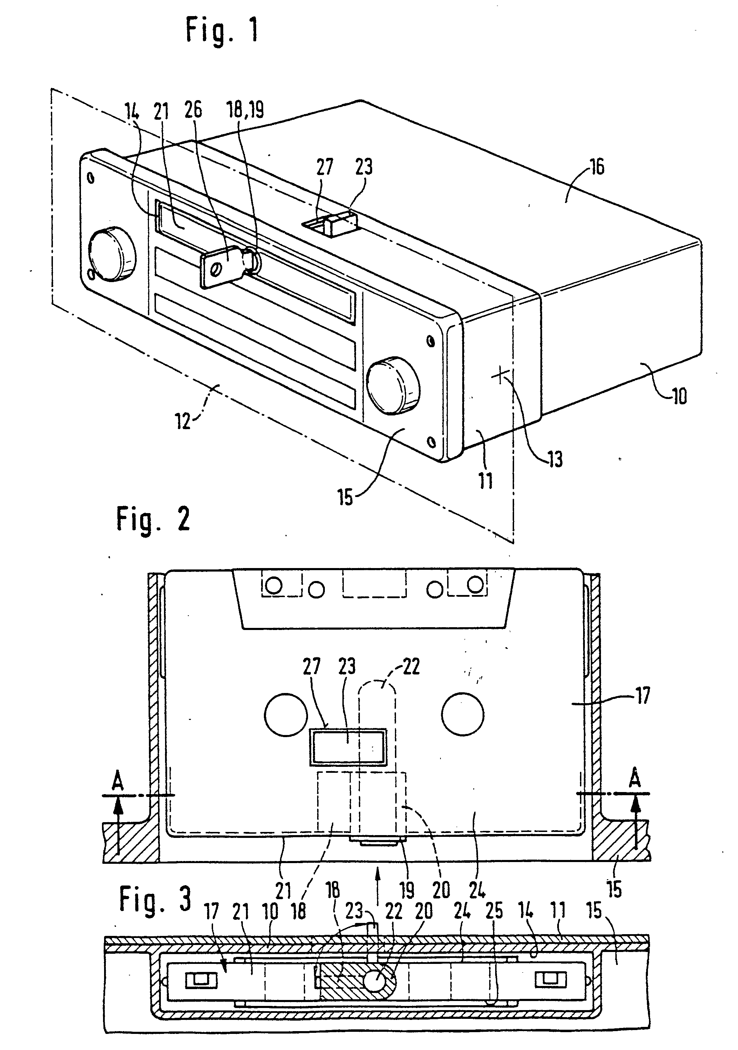

Laut Fig. 1 bis 3 ist das Zusatzgerät 10 mit Kassetten-Laufwerk unter der Gerätedecke mit Hilfe eines Einschubrahmens 11 in die gestrichelt angedeutete Fahrzeugwand 12, z. B. das Armaturenbrett, eingebaut. Der Einschubrahmen 11 ist fest mit der Fahrzeugwand 12 verbunden, das Zusatzgerät 10 dagegen lösbar mittels der Rasten 13 an den Seitenwänden mit dem Einschubrahmen 11 verrastet und liegt mit seiner die Bedienungselemente und die Einschuböffnung 14 für die Wechselkassetten (Tonbandkassetten) für Quereinschub tragenden Frontplatte 15 über der Stirn des Einschubrahmens 11 auf der Fahrzeugwand 12 auf. Das mit den Wechselkassetten kuppelbare, nicht sichtbare Laufwerk liegt im Beispiel nahe der Decke 16 des Zusatzgerätes 10. Zum Ausbau des Zusatzgerätes 10 können durch die Frontplatte 15 unter Umständen auch von unbefugter Seite herstellbare Lösewerkzeuge an die Rasten 13 geführt und die Rasten gelöst werden, so daß man das Zusatzgerät 10 aus dem Einschubrahmen 11 herausziehen und aus dem Fahrzeug entfernen kann. Soweit ist die Befestigungsvorrichtung bekannt.

Laut Neuerung ist entsprechend den Fig. 2 und 3 eine der üblichen Wechselkassette für das Zusatzgerät 10 im Umriß und in den Kupplungsorganen für das Laufwerk genau entsprechende Blindkassette 17 vorgesehen, in deren hohles Innere mittig und parallel zur Einschubrichtung (Pfeil) ein handelsübliches Sicherheits-Zylinderschloß 18 so integriert ist, daß die das Schließloch tragende Stirn oder Schlüssellochsperre 19 des Schließzylinders 20 flach in der von der Frontplatte 15 des Zusatzgerätes 10 her zugänglichen Stirnwand 21 der Blindkassette 17 und der vom Riegelzapfen 22 getragene Sperriegel 23 bei geöffnetem Zylinderschloß 18 horizontal zwischen Decke 24 und Boden 25 der Blindkassette 17 liegen. Dreht man den zum Zylinderschloß 18 gehörigen Sicherheitsschlüssel 26 um 90° nach rechts, dann schwenkt der Riegelzapfen 22 mit dem Sperriegel 23 aus der horizontalen Lage der Fig. 2 in die lotrechte Lage der Fig. 1 und 3.

Zum freien Schwenken des Sperriegels 23 in die lotrechte Sperrlage ist in der Decke 24 der Blindkassette 17 ein Fenster 27 so vorgesehen, daß der Sperriegel 23 ungehindert durchtreten kann und in der lotrechten Sperrlage gegen eine Fensterseite anliegt. Zur gleichzeitigen, gemeinsamen Verriegelung von Blindkassette 17, Zusatzgerät 10 und Einschubrahmen 11 sind in diesen Teilen sich mit dem ersten Fenster 27 deckende, weitere Fenster 27 vorgesehen, so daß der Sperriegel 23 in diese drei, das Schließblech bildenden Fenster 27 eintritt und so Blindkassette 17, Zusatzgerät 10 und Einschubrahmen 11 miteinander und damit das Zusatzgerät 10 fest und untrennbar mit dem Fahrzeug verriegelt. Ein Unbefugter kann jetzt zwar noch unter Umständen die Rasten 13 zwischen Zusatzgerät 10 und Einschubrahmen 11 lösen, trotzdem aber nicht mehr das Zusatzgerät 10 herausziehen. Die Entfernung ist nur dem Befugten durch Öffnen des Sicherheits-Zylinderschlosses 18 mit dem zugehörigen Sicherheitsschlüssel 26 möglich, wobei der Sperriegel 23 alle Fenster 27 verläßt und in seine horizontale Ruhelage in der Blindkassette 17 zurückkehrt. In dieser Stellung kann man dann die Blindkassette 17 mit dem Sicherheitsschlüssel 26 aus dem Zusatzgerät 10 herausziehen und eine echte Wechselkassette einsetzen oder herausnehmen oder das Zusatzgerät 10 aus dem Einschubrahmen 11 in bekannter Weise entfernen.

Diese Sicherung ist bei Zusatzgeräten 10 mit nahe dem Boden vorgesehenem Laufwerk und entsprechender Einschuböffnung 14 für die Wechselkassette über dem Boden durch Ausschwenken des Sperriegels 13 lotrecht nach unten in entsprechend im Boden der Blindkassette 17, des Zusatzgeräts 10 und des Einschubrahmens 11 vorgesehene Fenster 27 anwendbar. Bei identischen Wechselkassetten für Decken- und Boden-Laufwerke genügt der Einsatz einer einfach um 180° gewendeten Blindkassette 17.

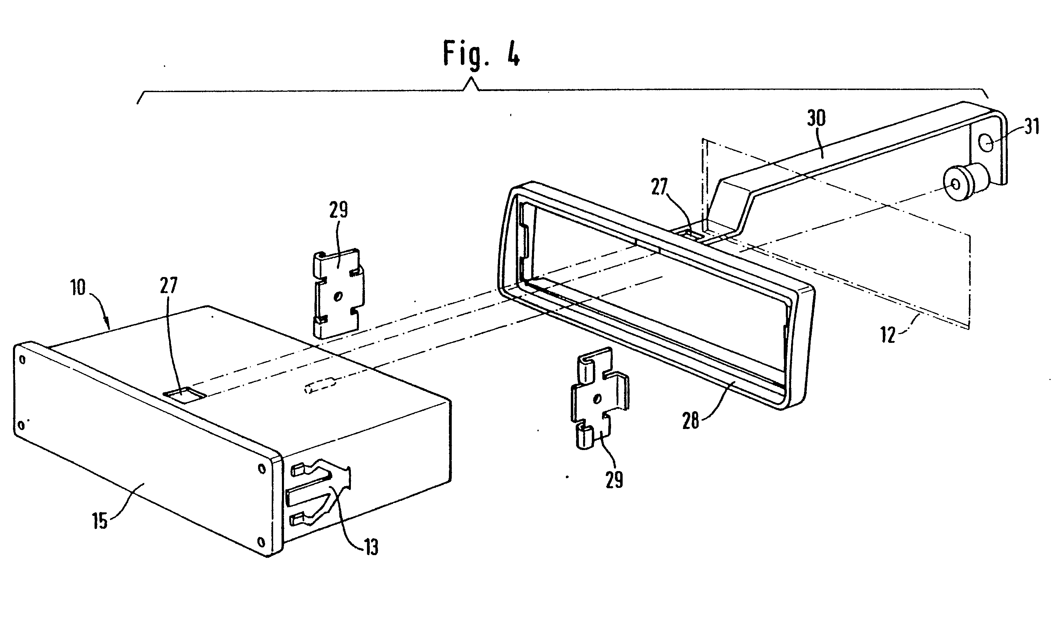

Bei der Anordnung laut Fig. 4 ist in bekannter Weise ein kurzer Einschubrahmen 28 mit Klammer 29 in der Fahrzeugwand 12 befestigt und das das Fenster 27 wiederum in seiner Decke 16 tragende Zusatzgerät 10 in den Einschubrahmen 28 eingeschoben und mit den Rasten 13 befestigt. In der Decke solcher kurzer Einschubrahmen 28 läßt sich kein Fenster 27 für den Sperriegel 23 unterbringen. Deshalb ist hier das Fenster 27 in einem in den Einschubrahmen 28 greifenden starren Flachbügel 30 vorgesehen, der bei 31 mit der Karosse des Fahrzeugs fest verschraubt ist. Wenn der Einschubrahmen 28 mit Hilfe der Klammer 29 in der Fahrzeugwand 12 befestigt und das Zusatzgerät 10 mit den Rasten 13 mit dem Einschubrahmen 28 verbunden ist, decken sich den Sperriegel 23 der Blindkassette 17 aufnehmenden Fenster 27 von Zusatzgerät 10 und Flachbügel 29 und sind Zusatzgerät und Flachbügel und damit das Fahrzeug, nur mit dem Sicherheitsschlüssel 26 wieder trennbar, miteinander verriegelt.

Mit geringen Änderungen oder Ergänzungen lassen sich die Blindkassetten auch mit zwei Sicherheits-Schlössern ausrüsten, welche die Blindkassette für Quer- und Längseinschub geeignet machen.

## Patentansprüche

1. Mechanische Diebstahl-Sicherung für elektronische Zusatzgeräte (10) mit Kassetten-Laufwerk und die Wechselkassetten an ihrer Frontseite aufnehmenden Einschuböffnung (14), insbesondere Kassetten-Autoradios, die in eine Fahrzeugwand (12) vom Aufenthaltsraum her herausziehbar eingeschoben und in der Fahrzeugwand (12) lösbar befestigt sind, dadurch gekennzeichnet, daß die Wechselkassette eine Blindkassette (17) ist und ein von der Frontplatte (15) des Zusatzgerätes (10) her bedienbares Sicherheits-Zylinderschloß (18) hat, das in der Blindkassette in der Offenstellung ihren Ein- und Ausschub nicht behindernd eingebaut ist und dessen Sperriegel (23) beim Schließen durch ein Fenster (27) in der Decke (24) oder im Boden (25) der Blindkassette (17) durch ein zweites Fenster (27) in der Decke (16) oder im Boden des Zusatzgerätes (10) in ein drittes Fenster (27) eines mit dem Fahrzeug oder der Fahrzeugwand (12) verbundenen Flachteiles (Einschubrahmen 11, Flachbügel 30) greift, und daß sich alle drei Fenster (27) decken und das Schließblech bilden, so daß Fahrzeug, Zusatzgerät und Blindkassette miteinander verriegelt und nur durch Aufschließen des Sicherheits-Zylinderschlosses voneinander trennbar sind.

2. Diebstahl-Sicherung nach Anspruch 1 für Laufwerke mit Quereinschub der Wechselkassette, dadurch gekennzeichnet, daß die Achse (Riegelzapfen 22) des Sicherheits-Zylinderschlosses (18) in der Blindkassette (17) senkrecht zum Bandlauf liegt.

3. Diebstahl-Sicherung nach Anspruch 1 für Laufwerke mit Längseinschub der Wechselkassette, dadurch gekennzeichnet, daß die Achse (Riegelzapfen 22) des Sicherheits-Zylinderschlosses (18) in der Blindkassette (17) parallel zum Bandlauf liegt.

4. Diebstahl-Sicherung nach den Ansprüchen 1 bis 3 für Laufwerke mit Längs- oder Quereinschub der Wechselkassette, dadurch gekennzeichnet, daß die Blindkassette (17) zwei den Längs- oder Quereinschub erlaubende Sicherheits-Zylinderschlösser (18) hat.

5. Diebstahl-Sicherung nach den Ansprüchen 1 bis 4 für Zusatzgeräte in einem von der Fahrzeugwand getragenen Einschubrahmen, dadurch gekennzeichnet, daß das dritte und einen Teil des Schließblechs bildende Fenster (27) im Einschubrahmen (11) ausgespart ist.

6. Diebstahl-Sicherung nach den Ansprüchen 1 bis 4 für nur mit Kurzrahmen oder ohne Halter in der Fahrzeugwand befestigte Zusatzgeräte, dadurch gekennzeichnet, daß das dritte Fenster (27) in einem das Zusatzgerät (10) über- oder untergreifenden und gegebenenfalls mittragenden und an der Fahrzeugkarosse (31) befestigten Flachbügel (30) vorgesehen ist.

## Claims

1. Mechanical safeguard against theft for electronic accessory units (10) with cassette mechanism and the insertion opening (14) accepting the cassette on the front side, in particular car radio cassette players which are withdrawably inserted into a vehicle wall (12) from the accommodation space of the vehicle and detachably fastened in the vehicle wall (12), characterised in that the exchangeable cassette is a dummy cassette (17) and has a security cylinder lock (18) that can be operated from the front plate (15) of the electronic accessory unit (10), that is incorporated in the dummy cassette in such a way that in the open position it does not impede its insertion and removal, and in locking its locking bolt (23) grips through a window (27) in the cover (24) or in the base (25) of the dummy cassette (17) through a second window (27) in the cover (16) or in the base of the accessory unit (10) into a third window (27) of a flat component (insertion frame 11, flat bracket 30) attached to the vehicle or the vehicle wall (12) and that all three windows (27) coincide and form the locking plate, so that the vehicle, accessory unit and dummy cassette are locked to one another and are only separable by unlocking the security cylinder lock.

2. Safeguard against theft as in claim 1 for mechanisms with transverse insertion of the exchangeable cassette, characterised in that the axis (bolt pivot 22) of the security cylinder lock (18) lies in the dummy cassette (17) at 90° to the tape run.

3. Safeguard against theft as in claim 1 for mechanisms with longitudinal insertion of the exchangeable cassette, characterised in that the axis (bolt pivot 22) of the security cylinder lock (18) lies in the dummy cassette (17) parallel to the tape run.

4. Safeguard against theft as in claims 1 to 3 for mechanisms with longitudinal or transverse insertion of the exchangeable cassette, characterised in that the dummy cassette (17) has two security cylinder locks (18) permitting longitudinal or transverse insertion.

5. Safeguard against theft as in claims 1 to 4 for accessory units in an insertion frame carried by the vehicle, characterised in that the third window (27), also forming a part of locking plate in the insertion frame (11), is saved.

6. Safeguard against theft as in claims 1 to 4 for accessory units secured only by short frames or without holder in the vehicle wall, characterised in that the third window (27) is provided in a flat bracket (30) gripping the accessory unit (10) above or below and if necessary helping to support it, and secured to the vehicle body (31).

## Revendications

1. Dispositif mécanique de protection antivol pour des accessoires électroniques (10) à mécanisme à cassettes et fenêtres d'introduction (14) recevant dans leur face frontale des cassettes interchangeables, notamment des auto-radios lecteurs de cassettes qui se glissent de manière extractible dans une paroi (12) du véhicule à partir de l'habitacle, et sont fixés de manière amovible à la paroi (12) du véhicule, dispositif caractérisé en ce que la cassette interchangeable est une cassette factice (17) et possède une serrure à cylindre de sécurité (18) qui se commande à partir de la plaque avant (15) de l'accessoire (10), et qui est montée dans la cassette de manière à ne gêner en position d'ouverture ni l'introduction, ni l'extraction, et dont le verrou (23) lors de la fermeture, traverse une fenêtre (27) de la paroi (24) ou du fond (25) de la cassette factice (17) à travers une seconde fenêtre (27) pour pénétrer dans la partie supérieure (16) ou dans le fond de l'appareil (10) avec une troisième fenêtre (27) d'une partie de surface (châssis enfichable 11, étrier plat 30) reliée au véhicule ou à la paroi (12) du véhicule, et en ce que toutes les trois fenêtres (27) se correspondent et forment la tôle de fermeture de manière que le véhicule, l'accessoire et la cassette factice soient verrouillés les uns aux autres et ne puissent se séparer que par l'ouverture de la serrure à cylindre de sécurité.

2. Dispositif de protection anti-vol selon la revendication 1 pour des dispositifs lecteurs de cassettes à introduction transversale des cassettes, caractérisé en ce que l'axe (goujon à pivot 22) de la serrure à cylindre de sécurité (18) se trouve dans la cassette factice (17) perpendiculairement au défilement de la bande.

3. Dispositif de protection anti-vol selon la revendication 1 pour des lecteurs de cassettes à cassettes introduites dans la direction longitudinale, caractérisé en ce que l'axe (goujon 22) de la serrure à cylindre de sécurité (18) est parallèle au défilement de la bande dans la cassette factice.

4. Dispositif de protection anti-vol selon les revendications 1 à 3 pour des lecteurs de cassettes à introduction dans la direction longitudinale ou transversale, caractérisé en ce que la cassette factice (17) comporte deux serrures de cylindre de sécurité (18) permettant une introduction longitudinale ou transversale.

5. Dispositif de protection anti-vol selon les revendications 1 à 4 pour un accessoire porté par un châssis dans la paroi d'un véhicule, caractérisé en ce que la fenêtre (27) qui forme la troisième fenêtre et une partie de la fenêtre fermante comportant un châssis enfichable (11).

6. Dispositif de protection anti-vol selon les revendications 1 à 4 avec seulement un châssis court ou seulement un support pour l'appareil fixé dans la paroi du véhicule, dispositif caractérisé en ce que la troisième fenêtre (27) comporte une patte plate (30) fixée à la carrosserie (31) du véhicule et portant la troisième fenêtre (27) passant par dessus ou en dessous de l'appareil (10) et le cas échéant participant au support de l'appareil.

Fig. 1

Fig. 2

Fig. 3

# Fig. 4

EP 0 183 963 B1